# EUROPÄISCHE PATENTANMELDUNG

(11) **EP 1 679 341 A1**
(43) Veröffentlichungstag der Anmeldung: **12.07.2006**
(21) Anmeldenummer: 05100126.1
(22) Anmeldetag: 11.01.2005
(51) Int. Cl.: C08K 3/00, C08L 67/02, C08K 9/04

(54) **Schlagzähe Zusammensetzung**

(71) Anmelder: Sika Technology AG, 6340 Baar (CH)
(72) Erfinder: Finter, Jürgen, 8037, Zürich (CH); Blank, Norman, 8803, Rüschlikon (CH)
(74) Vertreter: Isler, Jörg

(57) **Zusammenfassung**

Die vorliegende Erfindung betrifft Zusammensetzungen, welche mindestens eine Verbindung **A** sowie mindestens einen linearen oder verzweigten Polyester **B** sowie mindestens einen Zähigkeitsverbesserer **C** umfasst, wobei der lineare oder verzweigte Polyester **B** in Gegenwart eines Organo-Zinn- oder eines Organo-Titan- Katalysators aus einem makrocyclischen Poly(α,ω-Alkylen-terephtalat) oder aus einem makrocyclischen Poly(α,ω-Alkylen-2,6-Naphtalindicarboxylat) hergestellt wird.

Weiterhin wird das Herstellverfahren dieser Zusammensetzungen sowie deren Verwendung für die Herstellung von Verbundkörpern beschrieben.

## Beschreibung

### Technisches Gebiet

Die Erfindung betrifft das Gebiet der schlagzähen Polyester-Zusammensetzungen, insbesondere für die Verwendung in faserverstärkten Verbundkörpern.

### Stand der Technik

Thermoplastische Polyester sind bekannte Kunststoffe und werden breit eingesetzt. Für deren Einsatz in Faserverbundstoffen sind sowohl eine gute Benetzung der Faser, das heisst niedere Viskosität bei der Formteilherstellung, als auch hohes Molekulargewicht wegen der erforderlichen mechanischen Eigenschaften erwünscht. Die Viskosität der üblichen Polyester ist jedoch hierfür zu hoch, insbesondere wenn die Polyester für die Herstellung von Formkörpern verwendet werden. US 5,498,651 offenbart ein Polymerisierungsverfahren aus niederviskosen makrocyclischen Polyester-Oligomeren in der Gegenwart von Polymerisierungskatalysatoren und Epoxiden und/oder Thioepoxiden. Als hierfür besonders bevorzugtes Epoxid wird 3,4-Epoxycyclohexyl-3,4-Epoxycyclohexylcarboxylat offenbart. US 6,197,849 beschreibt organophile Phyllosilikate, welche als Zusatz zu Duroplasten (Thermosetpolymeren), insbesondere zu Epoxidharze oder Polyurethanen, eingesetzt werden. US 5,707,439 beschreibt die Herstellung von Kationen-getauschten Schichtmineralien. Weiterhin wird die Polymerisation von makrocyclischen Oligomeren in diesen Kationen-getauschten Schichtmineralien gezeigt. Derartige Polymerisat-Mischungen sind jedoch äusserst schwierig zu verarbeiten und führen zu schlechten mechanischen Eigenschaften, da die Schichtmineralien als Nukleierungsmittel wirken können.

### Darstellung der Erfindung

Aufgabe der vorliegenden Erfindung ist es daher, eine Zusammensetzung zur Verfügung zu stellen, welche einerseits gut verarbeitbar ist und andererseits über erhöhte Schlagzähigkeit verfügt.

Diese Aufgabe wird durch die Zusammensetzung gemäss des Anspruches 1 gelöst.

### Wege zur Ausführung der Erfindung

Die vorliegende Erfindung betrifft Zusammensetzungen, welche mindestens eine Verbindung **A** sowie mindestens einen linearen oder verzweigten Polyester **B** sowie mindestens einen Zähigkeitsverbesserer C umfasst.

Die Verbindung **A** weist mindestens zwei Glycidylether-Gruppen auf und ist bevorzugt ein Diglycidylether eines Bisphenol-A oder eines Bisphenol-F oder einer Mischung Bisphenol-A/Bisphenol-F ist oder ein flüssiges Oligomer davon ist. Als besonders geeignete Verbindungen **A** haben sich Diglycidylether von Bisphenol-A (DGEBA), von Bisphenol-F sowie von Bisphenol-A/F (Die Bezeichnung 'A/F' verweist hierbei auf eine Mischung von Aceton mit Formaldehyd, welche als Edukt bei dessen Herstellung verwendet wird). Durch die Herstellungsverfahren dieser Harze bedingt, ist klar, dass in den Flüssigharzen auch höher molekulare Bestandteile enthalten sind. Die Struktur derartiger Diglycidylether zeigt Formel (I). Bei Flüssigharzen beträgt der Polymerisationsgrad s in Formel (I) typischerweise zwischen 0.05 und 0.20. Solche Flüssigharze sind kommerziell erhältlich, typische Handelsprodukte sind beispielsweise Araldite® GY 250, Araldite® PY 304, Araldite® GY 282 (Huntsman) oder D.E.R 331 (Dow).

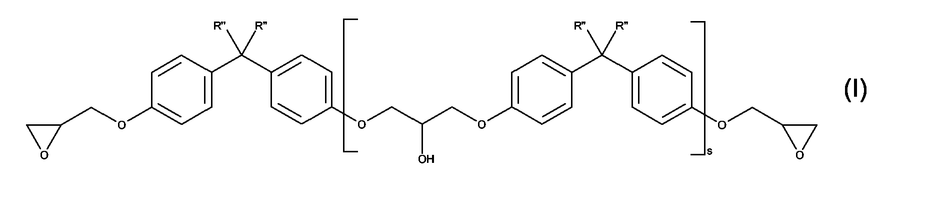

Weiterhin ist es auch möglich, dass die Verbindung **A** ein höhermolekulares Epoxy-Festharz der Formel (I) mit einem Polymerisationsgrad s von typischerweise einem Wert zwischen 2 und 12, ist. Es versteht sich, dass stets eine Molekulargewichtsverteilung vorliegt. Derartige Epoxy-Festharze sind kommerziell erhältlich beispielsweise von Dow oder Huntsman oder Resolution.

In einer Ausführungsform der Erfindung wird eine Mischung von Epoxy-Flüssigharz und Epoxy-Festharz verwendet. Bevorzugt ist das Gewichtsverhältnis von Flüssigharz zu Festharz 9 : 1 bis 1 : 1.

Insbesondere ist der Polyester B ein linearer Polyester und weist bevorzugt eine Strukturformel (II) oder (III) auf.

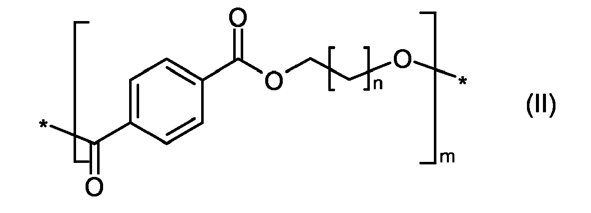

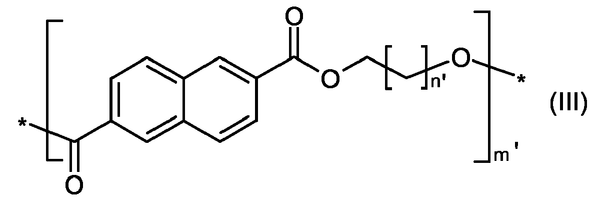

Die Indizes n und n' bedeuten hierbei je 1, 2, 3 oder 4. Insbesondere bedeuten n = 1 oder 3 und n' = 1 oder 3. Als bevorzugt gilt n = 3 und n' = 3.

Die Indizes m und m' sind Werte von 50 bis 2000, insbesondere von 50 bis 800, bevorzugt 100 bis 600, insbesondere bevorzugt von 100 bis 600.

Als bevorzugte Polyester **B** gelten Poly(1,2-Ethylen-Terephtalat) (PET) Poly(1,2-ethylen-2,6-Naphtalindicarboxylat) (PEN) und Poly(1,4-Butylen-Terephtalat) (PBT). Der meist bevorzugteste Polyester B ist Poly(1,4-Butylen-Terephtalat) (PBT).

Das für die Herstellung des Polyesters **B** verwendete makrocyclische Poly(α,ω-Alkylen-terephtalat) oder makrocyclische Poly(α,ω-Alkylen-2,6-Naphtalindicarboxylat) weist vorzugsweise die Struktur der Formel (IV) auf

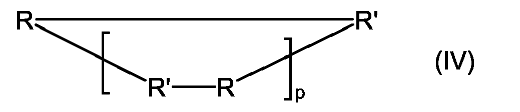

Hierbei bedeuten R eine Ethylen-, Propylen-, Butylen- oder Pentylengruppe und R' eine Gruppe der Formel und

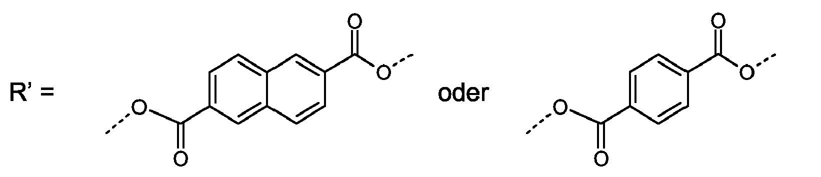

Die hier gezeigten gestrichelten Linien sollen die Verbindungen mit der Alkylengruppe R angeben und der Index p ist derart gewählt, dass das Molekulargewicht Mₙ des makrocyclischen Poly(α,ω-Alkylen-terephtalat)es oder des makrocyclischen Poly(α,ω-Alkylen-2,6-Naphtalindicarboxylat)es zwischen 300 und 2000 g/mol, insbesondere zwischen 350 bis 800 g/mol liegt.

Die Herstellung des makrocyclischen Poly(α,ω-Alkylen-terephtalat)es oder des makrocyclischen Poly(α,ω-Alkylen-2,6-Naphtalindicarboxylat)es erfolgt in bekannter Art und Weise, wie sie beispielsweise in dem Patent US 5,039,783 beschrieben ist.

Der in der Herstellung des linearen oder verzweigten Polyesters **B** anwesende Organo-Zinn- oder Organo-Titan- Katalysators ist jeder dem Fachmann hierfür bekannten -beispielsweise aus US 5,407,984- Katalysator.

Die Zusammensetzung gemäss weist vorzugsweise eine Menge linearer oder verzweigter Polyester **B** von 85 - 98 Gew.-%, bevorzugt von 90 - 98 Gew.-%, der Zusammensetzung auf.

Weiterhin umfasst die Zusammensetzung mindestens einen Zähigkeitsverbesserer **C.** Unter einem "Zähigkeitsverbesserer" wird hierbei und im Folgenden ein Zusatz zu einer Matrix verstanden, der insbesondere bei Duroplasten (Thermosets) wie Epoxidharzen, bei bereits geringen Zuschlägen von 0.5 - 8 Gew. % eine deutliche Zunahme der Zähigkeit bewirkt und somit in der Lage ist, höherer Biege-, Zug-, Schlag- oder Stossbeanspruchung aufzunehmen, bevor die Matrix einreisst oder bricht.

Der Zähigkeitsverbesserer **C** ist insbesondere ein mit organischen lonen-getauschtes Schichtmineral **C1** oder ein reaktiver Flüssigkautschuk **C2** oder ein Blockcopolymer **C3.**

Das lonen-getauschte Schichtmineral **C1** kann entweder ein Kationen-getauschtes Schichtmineral **C1c** oder ein Anionen-getauschtes Schichtmineral **C1a** sein.

Das Kationen-getauschte Schichtmineral **C1c** wird hierbei erhalten aus einem Schichtmineral **C1',** bei welchem zumindest ein Teil der Kationen durch organische Kationen ausgetauscht worden sind. Beispiele für derartige Kationen-getauschte Schichtmineralien **C1c** sind insbesondere diejenigen, welche in US 5,707,439 oder in US 6,197,849 erwähnt sind. Ebenso ist dort das Verfahren zur Herstellung dieser Kationen-getauschten Schichtmineral **C1c** beschrieben. Bevorzugt als Schichtmineral **C1'** ist ein Schichtsilikat. Insbesondere bevorzugt handelt es sich beim Schichtmineral **C1'** um ein Phyllosilikat, wie sie in US 6,197,849 Spalte 2, Zeile 38 bis Spalte 3, Zeile 5 beschrieben sind, insbesondere um einen Bentonit. Als besonders geeignet haben sich Schichtmineral **C1'** wie Kaolinit oder ein Montmorillionit oder ein Hectorit oder ein IIIit gezeigt.

Zumindest ein Teil der Kationen des Schichtmineral **C1'** wird durch organische Kationen ersetzt. Solche organischen Kationen sind insbesondere organischen Kationen, welche die Formeln (V), (VI), (VII), (VIII) oder (IX) aufweisen.

Die Substituenten R¹, R^{1'}, R^{1"}und R^{1'"} stehen je unabhängig voneinander für H oder ein C₁ - C₂₀ - Alkyl oder ein substituiertes oder unsubstituiertes Aryl. Bevorzugt stehen R¹, R^{1'}, R^{1"}und R^{1'"} nicht für denselben Substituenten. Der Substituent R² steht für H oder ein C₁ - C₂₀-Alkyl oder ein substituiertes oder unsubstituiertes Aryl.

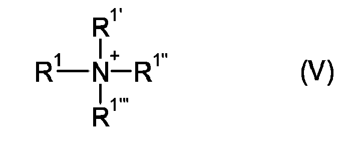

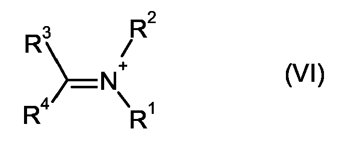

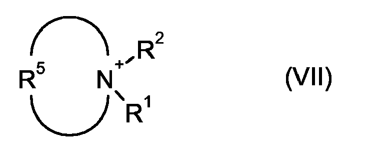

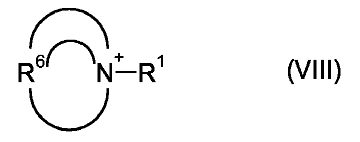

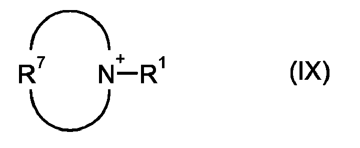

Die Substituenten R³ und R⁴ stehen je für H oder ein C₁ - C₂₀ - Alkyl oder ein substituiertes oder unsubstituiertes Aryl oder einen Substituenten - N(R²)₂. Der Substituent R⁵ steht für einen Substituenten, welcher zusammen mit dem in Formel (VII) gezeigten N⁺ einen gegebenenfalls substituierten aufweisenden Ring von 4 bis 9 Atomen bildet und gegebenenfalls Doppelbindungen aufweist. Der Substituent R⁶ steht für einen Substituenten, welcher zusammen mit dem in Formel (VIII) gezeigten N⁺ einen gegebenenfalls substituierten bicyclischen Ring von 6 bis 12 Atomen bildet und gegebenenfalls Heteroatome wie N, O, und S, beziehungsweise deren Kationen, enthält. Der Substituent R⁷ steht für einen Substituenten, welcher zusammen mit dem in Formel (IX) gezeigten N⁺ einen, gegebenenfalls substituierten, heteroaromatischen Ring der Ringgrösse von 5 bis 7 Atomen bildet.

Konkrete Beispiele für derartige organische Kationen der Formel (V) sind n-Octylammonium (R¹ = n-Octyl, R^{1'} = R^{1"} = R^{1'"} = H), Trimethyldodecylammonium (R¹ = C₁₂ - Alkyl, R^{1'} = R^{1"} = R^{1'"} = CH₃), Dimethyldodecylammonium (R¹ = C₁₂ - Alkyl, R^{1'} = R^{1"} = CH₃, R^{1'"} = H), oder Bis(hydroxyethyl)octadecylammonium (R¹ = C₁₈ - Alkyl, R^{1'} = R^{1"} = CH₂CH₂OH, R^{1'"} = H) oder ähnliche Derivate von Aminen, die aus natürlichen Fetten und Ölen gewonnen werden können.

Konkrete Beispiele für derartige organische Kationen der Formel (VI) sind Guanidinium Kationen oder Amidiniumkationen.

Konkrete Beispiele für derartige organische Kationen der Formel (VII) sind N-substituierte Derivate von Pyrrolidin, Piperidin, Piperazin, Morpholin, Thiomorpholin.

Konkrete Beispiele für derartige organische Kationen der Formel (VIII) sind Kationen von 1,4-Diazobicyclo[2.2.2]octan (DABCO) und 1-Azobicyclo-[2.2.2]octan.

Konkrete Beispiele für derartige organische Kationen der Formel (IX) sind N-substituierte Derivate von Pyridin, Pyrrol, Imidazol, Oxazol, Pyrimidin, Chinolin, Isochinoilin, Pyrazin, Indol, Bezimidazol, Benzoxaziol, Thiazol Phenazin und 2,2'-Bipyridin. Weiterhin sind geeignet cyclische Amidiniumkationen, insbesondere solche, wie sie in US 6,197,849 in Spalte 3 Zeile 6 bis Spalte 4 Zeile 67 offenbart werden.

Cyclische Ammoniumverbindungen zeichnen sich gegenüber linearen Ammoniumverbindungen durch eine erhöhte Thermostabilität aus, da der thermische Hoffmann - Abbau bei ihnen nicht auftreten kann

Bevorzugte Kationen-getauschte Schichtmineral **C1c** sind dem Fachmann unter dem Term Organoclay oder Nanoclay bekannt und sind kommerziell zum Beispiel unter den Gruppennamen Tixogel® oder Nanofil® (Südchemie), Cloisite® (Southern Clay Products) oder Nanomer® (Nanocor Inc.) erhältlich.

Das Anionen-getauschte Schichtmineral **C1a** wird hierbei erhalten aus einem Schichtmineral **C1",** bei welchem zumindest ein Teil der Anionen durch organische Anionen ausgetauscht worden sind. Ein Beispiel für ein derartig Anionen-getauschtes Schichtmineral **C1a** ist ein Hydrotalcit, bei dem zumindest ein Teil der Carbonat-Anionen der Zwischenschichten durch organische Anionen ausgetauscht wurden.

Es ist durchaus auch möglich, dass die Zusammensetzung gleichzeitig ein Kationen-getauschtes Schichtmineral **C1c** und ein Anionen-getauschtes Schichtmineral **C1a** enthält.

Der reaktive Flüssigkautschuk **C2** weist funktionelle Gruppen auf, welche bei erhöhter Temperatur, typischerweise bei einer Temperatur zwischen 80°C und 200°C, insbesondere zwischen 100°C und 160°C, mit sich selber oder mit anderen Verbindungen in der Zusammensetzung reagieren können. Als besonderes bevorzugte derartige funktionelle Gruppen gelten Epoxid-Gruppen. Besonders bevorzugt werden reaktive Flüssigkautschuke, wie sie für die Zähigkeitsverbesserung von Epoxydharzklebstoffen vorgeschlagen werden. Bevorzugt handelt es sich beim reaktive Flüssigkautschuk **C2** um ein Glycidylether-Gruppen terminiertes Polyurethanprepolymer ist. Als besonders geeignet haben sich reaktive Flüssigkautschuk **C2** der Formel (X) gezeigt.

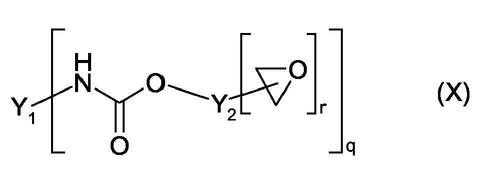

In Formel (X) steht Y₁ für einen q-wertigen Rest eines mit Isocyanatgruppen terminierten linearen oder verzweigten Polyurethanprepolymeren nach dem Entfernen der endständigen Isocyanatgruppen und Y₂ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen. Der Index q bedeutet hierbei einen Wert von 2, 3 oder 4 und der Index r einen Wert von 1, 2 oder 3. In einer Ausführungsform weist die Formel (X) mindestens ein aromatisches Strukturelement auf, welches über Urethangruppen in die Polymerkette eingebunden ist.

Als insbesondere vorteilhaft haben sich Flüssigkautschuke der Formel (XI) erwiesen. 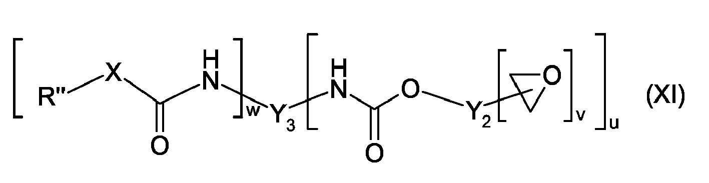 In Formel (XI) steht Y₃ für einen (u+w)-wertigen Rest eines mit Isocyanatgruppen terminierten linearen oder verzweigten Polyurethanprepolymeren nach dem Entfernen der endständigen Isocyanatgruppen und Y₂ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen. Der Index w bedeutet hierbei einen Wert von 1, 2 oder 3 und der Index u einen Wert von 4 - w und der Index v einen Wert von 1, 2 oder 3. In Formel (XI) stellt X entweder ein O oder ein NH oder ein N-Alkyl mit 1 bis 6 Kohlenstoffatomen dar, und R" stellt einen verzweigten oder unverzweigten Alkyl- oder Alkenyl- Substituenten mit 6 bis 24 Kohlenstoffen oder ein Poly(dimethylsiloxan)-Rest mit Molekulargewicht 1000 bis 10'000 g/mol. In einer Ausführungsform weist die Formel (XI) mindestens ein aromatisches Strukturelement auf, welches über Urethangruppen in die Polymerkette eingebunden ist.

Die Herstellung dieser reaktiven Flüssigkautschuke erfolgt in einer Art und Weise, wie sie beispielsweise in EP 1 431 325 A1 auf Seite 4, Zeile 37 bis Seite 6, Zeile 55 beschrieben wird.

Flüssigkautschuke **C2** der Formeln (X) und (XI) können einzeln oder bevorzugt im Gemisch eingesetzt werden. Wenn sie im Gemisch eingesetzt werden beträgt das Gewichtsverhältnis (X)/(XI) der Flüssigkautschuke der Formeln (X) und (XI) vorteilhaft von 100:1 bis 1:1.

Das Blockcopolymer **C3** wird erhalten aus einer anionischen oder kontrollierten radikalischen Polymerisation von Methacrylsäureester mit mindestens einem weiteren eine olefinisch Doppelbindung aufweisenden Monomeren. Als eine olefinisch Doppelbindung aufweisendes Monomer ist insbesondere solche, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylonitril und Vinylacetat.

Besonders bevorzugte Blockcopolymer **C3** sind Blockcopolymere aus Methacrylsäuremethylester, Styrol und Butadien. Derartige Blockcopolymere sind beispielsweise als Triblockcopolymere unter der Gruppenbezeichnung SBM bei Arkema erhältlich.

In einer Ausführungsform ist in der Zusammensetzung als Zähigkeitsverbesserer **C** neben einem lonen-getauschtem Schichtmineral **C1** zusätzlich entweder ein reaktiver Flüssigkautschuk **C2** oder ein Blockcopolymer **C3** vorhanden ist. Besonders bevorzugt ist die gleichzeitige Anwesenheit lonen-getauschtem Schichtmineral **C1** und reaktivem Flüssigkautschuk **C2.** Als lonen-getauschtes Schichtmineral **C1** wird hierbei ein Kationen- getauschtes Schichtmineral **C1c** bevorzugt.

Die Menge an Zähigkeitsverbesserer **C** beträgt vorzugsweise 10-85 Gew.-% bezogen auf das Gewicht der Summe von **A+C.**

Die Zusammensetzung kann gegebenenfalls weitere Bestandteile aufweisen, insbesondere Füllstoffe, Weichmacher, Thixotropiermittel, Haftvermittlersubstanzen, insbesondere Alkoxysilane und Titanate, Stabilisatoren, insbesondere Wärmestabilisatoren, wie beispielsweise solche, die dem Fachmann unter HALS (Hindered Amine Light Stabilisators) bekannt sind, und UV-Stabilisatoren, wie beispielsweise solche, die unter dem Markennamen TINUVIN® von Ciba Speciality Chemicals erhältlich sind oder andere dem Fachmann in der Formulierung von Klebstoffen, Vergussmassen oder Dichtmassen geläufigen Zusatzstoffen und Additiven. Bevorzugt sind Zusammensetzungen, welche keine Lösungsmittel und/oder Weichmacher enthalten.

Die Zusammensetzungen zeichnen sich einerseits durch hohe Zähigkeiten, und andererseits durch gute Verarbeitungseigenschaften, wie beispielsweise tiefe Schmelzviskosität, und gleichzeitig durch eine hohe Schmelztemperatur nach der Polymerisation aus.

Die Zusammensetzung wird vorzugsweise durch ein Verfahren umfassend die folgenden Schritte hergestellt:
- Bildung einer Vormischung **AC** von Zähigkeitsverbesserer **C** sowie der Verbindung **A,** welche mindestens zwei Glycidylether-Gruppen aufweist.
- Zugabe der Vermischen Vormischung **AC** zum makrocyclischen Poly(α,ω-Alkylen-terephtalat) oder makrocyclischen Poly(α,ω-Alkylen-2,6-Naphtalindicarboxylat), welches mit dem Organo-Zinn- oder Organo-Titan- Katalysators vermengt ist.

Der lineare oder Polyester verzweigten Polyesters **B** wird vorzugsweise bei einer Temperatur von 160 °C bis 220 °C, insbesondere zwischen 160°C bis 200°C, in Gegenwart der Vormischung **AC** sowie eines Organo-Zinn- oder Organo-Titan-Katalysators durch ringöffnende Polymerisation aus einem makrocyclischen Poly(α,ω-Alkylen-terephtalat) oder aus einem makrocyclischen Poly(α,ω-Alkylen-2,6-Naphtalindicarboxylat) hergestellt.

Die Herstellung der Vormischung **AC** erfolgt vorzugsweise durch Einmischen des Zähigkeitsverbesserers **C** in die Verbindung **A.** Diese Vormischung erfolgt bevorzugt bei erhöhter Temperatur unter starken Scherkräften. Falls es sich bei der Verbindung um ein Festharz handelt, kann die Vormischung **AC** auch durch ein Vermengen von Verbindung **A** in Pulverform, oder mittels Extrusion erfolgen.

Vorzugsweise wird zunächst eine homogene Vormischung von makrocyclischen Poly(α,ω-Alkylen-terephtalat) oder makrocyclischen Poly(α,ω-Alkylen-2,6-Naphtalindicarboxylat) und Organo-Zinn- oder Organo-Titan-Katalysator bei Temperaturen deutlich unter der Polymerisationstemperatur, z.B. in einem Zweischneckenextruder hergestellt und nach dem Erkalten zu einem Pulver vermahlen. Vorzugsweise wird dann die Vormischung **AC** unter Rühren zu einer pulverförmigen Vormischung von makrocyclischen Poly(α,ω-Alkylen-terephtalat) oder makrocyclischen Poly(α,ω-Alkylen-2,6-Naphtalindicarboxylat) und Organo-Zinn- oder Organo-Titan-Katalysator bei Raumtemperatur zugegeben, und entweder pulverförmig in eine Form gegeben oder bis zur Schmelztemperatur des Makrocyclus bei 160 - 180 °C erhitzt und dann als flüssige Mischung in Form gegeben. Die ringöffnende Polymerisation erfolgt dann bei Temperaturen von mehr als 180 °C.

Es ist aber auch möglich, die Mischung aus **AC** zum Beispiel im Extruder bei Temperaturen von weniger als 140 °C vorzumischen, nach dem Abkühlen zu mahlen und zu lagern, oder auch die in der Schmelze hergestellte Mischung abzukühlen, zu zerkleinern und zu lagern.

Vorzugsweise wird die Zusammensetzung bereits weiter verwendet, bevor der endgültige Polymerisationsgrad erreicht wird.

Eine derartige Herstellung hat den Vorteil, dass der Zähigkeitsverbesserer C unerwarteterweise gut und homogen eingearbeitet werden kann, so dass auf die Verwendung von Lösungsmitteln oder Weichmacher verzichtet werden kann oder zumindest stark reduziert werden kann. Dies wirkt sich insbesondere darauf aus, dass die Schmelztemperatur der Zusammensetzung nicht unnötig erniedrigt wird.

In einer Ausführungsform der vorliegenden Erfindung wird die beschriebenen Zusammensetzung für die Herstellung von Verbundkörper, insbesondere von Nano-Verbundwerkstoffen (Nanocomposites), verwendet.

Derartige Verbundkörper enthalten zumindest eine vorgängig beschriebene Zusammensetzung sowie Fasern. Die Fasern sind ihrerseits Fasern ausgewählt aus der Gruppe umfassend Glasfasern, Metallfasern, Kohlenfasern, Aramidfasern, Mineralfasern, Pflanzenfasern sowie Mischungen davon. Bevorzugte Fasern sind Kohlenstofffasern oder Metallfasern. Besonders bevorzugt sind Stahlfasern. Es können auch unterschiedliche Arten von Fasern gleichzeitig im Verbundkörper vorhanden sein. Die Fasern können als Kurz- oder Langfasern vorhanden sein und zwar als Einzelfasern oder als Rovings. Weiterhin können die Fasern als Gewirke, Gelege oder Gewebe vorliegen. Die Orientierung der Fasern kann unidirektional oder zufällig sein. In einer besonders bevorzugten Ausführungsform liegen die Fasern als unidirektionale Fasernschichten vor. Es können auch mehrere Schichten von derartigen Gewirken, Gelegen oder Geweben in einem Verbundkörper vorhanden sein. Die genaue Ausgestaltung der Fasern-Orientierung und die verwendeten Fasern ist sehr von der Geometrie des Verbundkörpers und den Anforderung bezüglich der mechanischen Belastung, welche an den Verbundkörper gestellt werden, abhängig. Der Verbundkörper weist vorzugsweise einen Anteil Fasern 30 bis 65 Vol-%, bezogen auf das Volumen des Verbundkörpers auf.

In der Herstellung des Verbundkörpers können unterschiedliche Verfahren zum Einsatz gelangen. So ist es beispielsweise möglich, dass Endlos-Profile, insbesondere in Form von Lamellenform, hergestellt werden, indem durch ein kontinuierliches Abwickeln von Rollen von mehreren Rovings oder eines oder mehreren Faserngewebes, -geleges oder -gewirkes die Fasern durch eine geheizte Form gezogen werden, in welcher die geschmolzene Zusammensetzung auf die Fasern gegeben wird und die Fasern durchdringt. Die Form weist in einer Ausführungsform einen Ausgang aufweist, durch welchen während dem Erkalten der Verbundkörper kontinuierlich ausgetragen wird. In einer anderen Ausführungsform weist diese Form ebenfalls einen Ausgang auf, durch welchen der Verbundkörper kontinuierlich ausgetragen wird, wird jedoch in einem weiteren Schritt wird stromabwärts mittels Pressen, vorzugsweise beheizten Pressen, verdichtet und allenfalls mittels einer Maske auf die gewünschte Querschnittgeometrie gebracht. In einer daran anschliessenden Abkühlungszone wird der derart hergestellte Verbundkörper auf Raumtemperatur abgekühlt. Das Endlosprofil wird schliesslich aufgerollt oder abgelängt. Solche Endlosprofile eigenen sich insbesondere gut als Verstärkungsprofile, insbesondere als Verstärkungslamellen, wie sie beispielsweise für das statische Verstärken von Bauwerken eingesetzt werden. Solche Verstärkungsprofile werden vorteilhaft mittels Klebstoff mit der zu verstärkenden Struktur kraftschlüssig verklebt. Als besonders bevorzugte Fasern sind hierfür Kohlenfasern und Glasfasern einsetzbar.

Weiterhin können Verbundkörper mittels Formen, in welchen Fasern eingelegt werden, mit der Zusammensetzung gefüllt werden. Die endgültige Form kann durch Pressen und Umformen erfolgen. Die hierfür verwendeten Verfahren sind dem Fachmann bestens bekannt und umfassen unter anderem insbesondere auch RIM, RTM Verfahren.

Schliesslich können, insbesondere wenn einzelne Kurzfasern verwendet werden, die Fasern mit der geschmolzenen Zusammensetzung, gegebenenfalls bei deren Herstellung, homogen vermischt werden und in eine Form gegossen oder gepresst werden, um einen Verbundkörper zu bilden.

Das verwendete Verfahren und die Art der Faserverstärkung ist stark abhängig von den Anforderungen, die an den Verbundkörper gestellt werden.

Die erfindungsgemässen Verbundkörper können breit eingesetzt werden. Insbesondere finden sie Anwendung zur statischen Verstärkung eines Bauwerkes oder eines Transportmittels. Sie können einerseits zusammen mit anderen Werkstoffen oder alleine zum Einsatz kommen. Beispielhaft seien einerseits Verstärkungen von Brücken oder Tunnels oder Häusern erwähnt. Andere beispielhafte Beispiele sind Führerkabinen, Karosserien, Stossstangen, Kotflügel, Reserveradmulden, Unterboden und Dach von Automobilen, Zugfahrzeugen oder Bussen oder LKWs. Weitere Bespiele von Anwendungen solcher Verbundkörper finden sich in der Sport- und Freizeitartikel wie Tennisschläger, Fahrräder, Freizeitboote. Bevorzugt sind insbesondere alle Anwendungen, bei denen die Verwendung dieser erfindungsgemässen Verbundkörper zu einer Gewichtseinsparung verglichen mit der Verwendung von konventionellen Werkstoffen führt.

### Beispiele

### Vergleichsbeispiel 1 (Ref. 1):

20 g makrocyclisches Polybutylenterephthalat (PBT) mit 1 % eines Titanatkatalysators (PBT XB3 von Cyclics Corp.) wird unter Stickstoff und Rühren bei 160 °C aufgeschmolzen. Die Schmelze wird in eine auf 195°C temperierte Metallform gegeben und dort unter Luftausschluss 30 Minuten polymerisiert. Man erhält eine Platte der Dimension 2*40*120 mm, aus der Prüfstäbe für nachfolgende mechanische Messungen gefräst werden.

### Vergleichsbeispiele 2 bis 4 (Ref. 2, Ref. 3, Ref.4):

19.0 g makrocyclisches Polybutylenterephthalat (PBT) mit 1 % eines Titanatkatalysators (PBT XB3 von Cyclics Corp.) und 1.0 g flüssiges Epoxidharz (Araldite® GY 250, Hersteller Huntsman) werden unter Stickstoff und Rühren bei 160 °C aufgeschmolzen. Die Schmelze wird in eine auf 195°C temperierte Metallform gegeben und dort unter Luftausschluss 30 Minuten polymerisiert. Man erhält eine Platte der Dimension 2*40*120 mm, aus der Prüfstäbe für nachfolgende mechanische Messungen gefräst werden (***Ref.2***).

In analoger Weise werden die Versuche für ***Ref.3*** mit 1.0 g Araldite® MY 790 (destillierter, reiner Bisphenol-A-diglycidylether, Hersteller Huntsman) und für ***Ref.4*** mit 1.0 g Araldite® CY 179 (3,4-Epoxycyclohexyl- 3,4 epoxycyclohexylcarboxylat, Hersteller Huntsman) durchgeführt.

### Vergleichsbeispiel 5 (Ref. 5):

19.6 g makrocyclisches Polybutylenterephthalat (PBT) mit 1 % eines Titanatkatalysators (PBT XB3 von Cyclics Corp.) wird unter Stickstoff und Rühren bei 175 °C aufgeschmolzen und mit 0.4 g Tixogel® VZ (Kationen-getauschter Bentonit, Hersteller Südchemie) versetzt. Die erhaltene Lösung wird zur Polymerisation in eine auf 195°C temperierte Metallform gegeben und dort unter Luftausschluss 30 Minuten polymerisiert. Man erhält eine Platte der Dimension 2*40*120 mm, aus der Prüfstäbe für nachfolgende mechanische Messungen gefräst werden.

### Vergleichsbeispiel 6 (Ref. 6):

Vergleichsbeispiel 6 **(*Ref.6*)** ist gleich wie Vergleichsbeispiel 5 **(*Ref.5*)** ausser dass eine doppelter Gehalt an Tixogel® VZ verwendet wurde, d.h. 0.8 g auf 19.2 g PBT. Es zeigte ich hier jedoch, dass eine derartig hohe Konzentration von Kationen-getauschtem Schichtmineral nicht mehr homogen aufgenommen werden konnte. Es wurden deshalb keine mechanischen Werte bestimmt.

### Beispiel 1 (1):

20 g SBM AF-X M22 (Triblockcopolymer aus Styrol, Butadien, Methylmethacrylat im Verhältnis 1:1:1, Molekulargewicht 20'000 Dalton, Hersteller Arkema) ("SBM") werden 80 g technischem Bisphenol-A-diglycidylether (Araldite® GY 250, Huntsman) unter Stickstoff und Rühren bei 205 °C gelöst. Nach Abkühlen auf Raumtemperatur wird eine klare hochviskose Lösung **(AC)erhalten.**

19.0 g makrocyclisches Polybutylenterephthalat (PBT) mit 1 % eines Titanatkatalysators (PBT XB3 von Cyclics Corp.) werden unter Stickstoff und Rühren bei 175°C im Ölbad aufgeschmolzen und mit 1 g der Lösung des SBM in Flüssigharz **(AC)** versetzt. Die erhaltene Lösung wird zur Polymerisation in eine auf 195° C temperierte Metallform gegeben und dort unter Luftausschluss 30 Minuten polymerisiert. Man erhält eine Platte der Dimension 2*40*120 mm, aus der Prüfstäbe für nachfolgende mechanische Messungen gefräst werden.

### Beispiel 2 (2):

Es wurde ein reaktiver Flüssigkautschuk ("RLR") wie folgt hergestellt:

200 g PolyTHF® 2000 (OH-Zahl 57.5 mg/g KOH) wurden 30 Minuten unter Vakuum bei 100°C getrocknet. Anschliessend wurden 47.5 g IPDI und 0.04 g Dibutylzinndilaurat zugegeben. Die Reaktion wurde unter Vakuum bei 90°C bis zur Konstanz des NCO-Gehaltes bei 3.58% nach 2.5 h geführt (theoretischer NCO-Gehalt: 3.70%). Anschliessend wurden 118.0 g technischer Trimethylolpropanglycidylether (Araldite® DY-T, Hersteller Huntsman, OH Gehalt 1.85 Äquivalent/kg) zugegeben. Es wurde bei 90°C unter Vakuum weitergerührt, bis der NCO-Gehalt nach weiteren 3h unter 0.1% gesunken war. So wurde ein klares Produkt mit einem Epoxid-Gehalt von 2.50 eq/kg erhalten

25 g des so erhaltenen reaktiven Flüssigkautschuks (*RLR1*) erhaltenen werden mit 75 g technischem Bisphenol-A-diglycidylether (Araldite® GY 250, Huntsman) verdünnt.

19.0 g makrocyclisches Polybutylenterephthalat (PBT) mit 1 % eines Titanatkatalysators (PBT XB3 von Cyclics Corp.) werden unter Stickstoff und Rühren bei 175 °C im Ölbad aufgeschmolzen und mit 1 g der Lösung des *RLR1* in Flüssigharz **(AC)** versetzt. Die erhaltene Lösung wird zur Polymerisation in eine auf 195° C temperierte Metallform gegeben und dort unter Luftausschluss 30 Minuten polymerisiert.

### Beispiel 3 (3):

50 g des in Beispiel 2 beschriebenen reaktiven Flüssigkautschuks (RLR1) werden mit 50 g technischem Bisphenol-A-diglycidylether (Araldite® GY 250, Huntsman) verdünnt. 19.0 g makrocyclisches Polybutylenterephthalat (PBT) mit 1 % eines Titanatkatalysators (PBT XB3 von Cyclics Corp.) werden unter Stickstoff und Rühren bei 175 °C im Ölbad aufgeschmolzen und mit 1 g der Lösung *RLR1* in Flüssigharz **(AC)** versetzt. Die erhaltene Lösung wird zur Polymerisation in eine auf 195° C temperierte Metallform gegeben und dort unter Luftausschluss 30 Minuten polymerisiert.

### Beispiel 4 (4):

30 g Cloisite® 93A (Kationen-getauschter Montmorillonit, Hersteller Southern Clay Products) werden bei 90 °C mit 70 g technischem Bisphenol-A-diglycidylether (Araldite® GY 250, Huntsman) gerührt. Nach einer Stunde wird eine klare viskose Masse erhalten.

19.0 g makrocyclisches Polybutylenterephthalat (PBT) mit 1 % eines Titanatkatalysators (PBT XB3 von Cyclics Corp.) werden unter Stickstoff und Rühren bei 160 °C im Ölbad aufgeschmolzen und mit 1 g des gequollenen Schichtsilikats in Flüssigharz **(AC)** versetzt. Die erhaltene Lösung wird zur Polymerisation in eine auf 195° C temperierte Metallform gegeben und dort unter Luftausschluss 30 Minuten polymerisiert.

### Beispiel 5 (5):

Es wurde ein reaktiver Flüssigkautschuk ("RLR") wie folgt hergestellt:

Aus 48.19 g (217 mmol) Isophorondiisocyanat (IPDI) und 200 g (100mmol) α,ω-Dihydroxy-Polybutylenoxid (PolyTHF® 2000, Hersteller BASF) wird ein isocyanat-terminiertes Präpolymer mit 25 mg Dibutyl-zinndilaurat als Katalysator bei 90 °C hergestellt. Danach werden unter Rühren 11.1 g monohydroxyterminiertes Poly(dimethylsiloxan) (Silaplan FM 041, Molekulargewicht 1000 Dalton, Hersteller Itochu) sowie 109 g eines technischen Trimethylolpropanglycidylethers (Araldite® DY-T, Hersteller Huntsman, OH-Gehalt 1.85 Äquivalent/kg zugegeben. Nach 60 Minuten ist die Isocyanatkonzentration kleiner 0.1 %. Der so erhaltene reaktive Flüssigkautschuk (RLR2) wird mit 100 g flüssigem Epoxidharz (Araldite® GY 250, Hersteller Huntsman) verdünnt.

150 g dieses mit flüssigem Epoxydharz verdünnten reaktiven Flüssigkautschuks werden bei 90 °C mit 50 g Cloisite® 30B (Kationen-getauschter Montmorillonit, Hersteller Southern Clay Products) versetzt und zu einer klaren viskosen Paste gequollen. **(AC)**

19.0 g makrocyclisches Polybutylenterephthalat (PBT) mit 1 % eines Titanatkatalysators (PBT XB3 von Cyclics Corp.) werden unter Stickstoff und Rühren bei 175 °C im Ölbad aufgeschmolzen und mit 1 g der oben beschriebenen *RLR2*/Nanoclay/Flüssigharz-Vormischung **(AC)** versetzt. Die erhaltene Lösung wird zur Polymerisation in eine auf 195° C temperierte Metallform gegeben und dort unter Luftausschluss 30 Minuten polymerisiert. Man erhält eine Platte der Dimension 2*40*120 mm, aus der Prüfstäbe für nachfolgende mechanische Messungen gefräst werden.

### Beispiel 6 (6):

Aus 48.19 g (217 mmol) Isophorondiisocyanat (IPDI) und 200 g (100mmol) α,ω-Dihydroxy-Polybutylenoxid (PolyTHF® 2000, Hersteller BASF) wird ein isocyanat-terminiertes Präpolymer mit 25 mg Dibutyl-zinndilaurat als Katalysator bei 90 °C hergestellt.

Danach werden unter Rühren zuerst 4.11 g (22.2 mMol) n-Dodecylamin sowie danach 109 g eines technischen Trimethylolpropanglycidylethers (Araldite® DY-T, Hersteller Huntsman, OH Gehalt 1.85 Äquivalent/kg) zugegeben. Nach 60 Minuten ist die Isocyanatkonzentration kleiner 0.1 %.

40 g des so erhaltenen reaktiven Flüssigkautschuks (RLR3) werden mit 40 g technischem Bisphenol-A-diglycidylether (Araldite® GY 250, Huntsman) verdünnt und unter Rühren auf 90 °C aufgeheizt. Dann werden 20 g Cloisite® 93A (Kationen-getauschter Montmorillonit, Hersteller Southern Clay Products) zugefügt und zu einer klaren viskosen Paste gequollen. **(AC)**

19.0 g makrocyclisches Polybutylenterephthalat (PBT) mit 1 % eines Titanatkatalysators (PBT XB3 von Cyclics Corp.) werden unter Stickstoff und Rühren bei 175 °C im Ölbad aufgeschmolzen und mit 1 g der oben beschriebenen RLR3/Nanoclay/Flüssigharz-Vormischung **(AC)** versetzt. Die erhaltene Lösung wird zur Polymerisation in eine auf 195° C temperierte Metallform gegeben und dort unter Luftausschluss 30 Minuten polymerisiert.

### Beispiel 7 (7):

20 g RLR3 (wie in Beispiel 6 beschrieben) werden mit 60 g technischem Bisphenol-A-diglycidylether (Araldite® GY 250, Huntsman) verdünnt und unter Rühren auf 90 °C aufgeheizt. Dann werden 20 g Cloisite® 93A (Kationen-getauschter Montmorillonit, Hersteller Southern Clay Products) zugefügt und zu einer klaren viskosen Paste gequollen. **(AC)**
19.0 g makrocyclisches Polybutylenterephthalat (PBT) mit 1 % eines Titanatkatalysators (PBT XB3 von Cyclics Corp.) werden unter Stickstoff und Rühren bei 175 °C im Ölbad aufgeschmolzen und mit 1 g der oben beschriebenen RLR3/Nanoclay/Flüssigharz-Vormischung **(AC)** versetzt. Die erhaltene Lösung wird zur Polymerisation in eine auf 195° C temperierte Metallform gegeben und dort unter Luftausschluss 30 Minuten polymerisiert.

### Vergleichsbeispiel 7 (Ref. 7):

Vergleichsbeispiel 7 ***(Ref.7)*** ist gleich wie Beispiel 1 **(1),** ausser dass anstelle von Araldite® GY 250 eine identische Menge an Araldite® CY 179 (3,4-Epoxycyclohexyl- 3,4 epoxycyclohexylcarboxylat, Hersteller Huntsman) verwendet wurde. Die derartig hergestellten Probekörper waren derartig spröde, dass sie beim Fräsen zersprangen und nicht gemessen werden konnten.

**Tabelle 1: Zusammensetzung der Beispiele.**

| | Zusatz zu PBT **(B)** | **A** [%]* | **C** [%]* | **C/(A+C)** [%] |
|---|---|---|---|---|
| ***Ref.1*** | *-* | | | |
| ***Ref.2*** | GY 250 (***A***) | 5 | | |
| ***Ref.3*** | MY 790 (A) | 5 | | |
| ***Ref.4*** | CY 179 (-) | | | |
| ***Ref.5*** | Tixogel® VZ(***C1***) | | 2 | 100 |
| ***Ref.6*** | Tixogel® VZ(***C1***) | | 4 | 100 |
| ***Ref.7*** | CY 179 (-) SBM (***C3***) | | 1 | |
| ***1*** | GY 250 (***A***) SBM (***C3***) | 4 | 1 | 20 |
| **2** | GY 250 (***A***) *RLR1 **(C2)*** | 3.75 | 1.25 | 25 |
| **3** | GY 250 (***A***) *RLR1* **(*C2*)** | 2.5 | 2.5 | 50 |
| **4** | GY 250 (***A***) Cloisite® 93A (***C1***) | 3.5 | 1.5 | 30 |
| ***5*** | GY 250 (***A***) Cloisite® 30 B (***C1***) RLR2 (***C2***) | 0.8 | 4.2 | 84 |
| ***6*** | GY 250 (***A***) Cloisite® 93A (***C1***) RLR3 (***C2***) | 2 | 3 | 60 |
| ***7*** | GY 250 (***A***) Cloisite® 93A (***C1***) RLR3 (***C2***) | 3 | 2 | 40 |

| | | | | |
|---|---|---|---|---|
| * bezogen auf das Gewicht der Zusammensetzung | | | | |

### Prüfmethoden

Biegfestigkeit, Biegedehnung und Biegemodul wurden nach DIN EN ISO 178 (Bestimmung der Biegeeigenschaften) auf einer Instron Prüfmaschine Typ 1185-5500R mit 2mm/min bei 23°C, 50 % rel. Luftfeuchtigkeit gemessen.

**Tabelle 2: Mechanische Eigenschaften der Beispiele.**

| | Biegfestigkeit [MPa] | Biegedehnung [%] | Biegemodul [MPa] |
|---|---|---|---|
| ***Ref.1*** | 51.0 | 1.6 | 3175 |
| ***Ref.2*** | 62.7 | 2.6 | 2704 |
| ***Ref.3*** | 55.8 | 2.0 | 2772 |
| ***Ref.4*** | 14.0 | 0.5 | 2614 |
| ***Ref.5*** | 25.87 | 0.8 | 2795 |
| ***Ref.6*** | n.m.** | n.m.** | n.m.** |
| ***Ref.7*** | n.m.** | n.m.** | n.m.** |
| ***1*** | 73.5 | 3.3 | 2684 |
| ***2*** | 77.41 | 4.65 | 2267 |
| ***3*** | 64.58 | 3.55 | 2024 |
| ***4*** | 85.82 | 4.5 | 2519 |
| ***5*** | 86.9 | 4.1 | 2709 |
| ***6*** | 81.73 | 4.38 | 2458 |
| ***7*** | 79.86 | 3.79 | 2395 |

| | | | |
|---|---|---|---|
| **n.m. = nicht messbar | | | |

Tabelle 2 zeigt, dass Formulierungen mit technischem Epoxy-Flüssigharz (Araldite® GY 250), welches einen Anteil an hydroxyfunktionellen Oligomeren (s > 0 in Formel (I)) aufweist, bessere mechanische Eigenschaften zeigt als der diejenigen mit hydroxylgruppenfreien Bisphenol-A-diglycidylether (Araldite® MY 790) (***Ref*. *2*** und ***Ref. 3***). Weiterhin zeigt Tabelle 2, dass zwei Glycidylethergruppen aufweisende Verbindungen Araldite® GY 250 und Araldite® MY 790 im Vergleich zu Araldite® CY 179 (3,4-Epoxycyclohexylmethyl-3,4-epoxycyclohexancarboxylat ***Ref. 4*** zu einer markanten Verbesserung der mechanische Eigenschaften führt.

Weiterhin zeigen die Resultate der erfindungsgemässen Zusammensetzungen massiv höhere Werte in den mechanische Eigenschaften. Es fällt zudem auf, dass die erfindungsgemässen Zusammensetzungen gegenüber den Vergleichsbeispielen gleichzeitig höhere Biegefestigkeiten und Biegedehnungen aufweisen.

Es lassen sich in den erfindungsgemässen Zusammensetzungen höhere Gehalte an Zähigkeitsverbesserern als in den Vergleichsbeispielen realisieren. So sind in ***Ref. 6*** keine homogen eingemischten Zusammensetzungen mit einem Zähigkeitsverbesserergehalt von 4 Gew. % nicht erreichbar, während dies bei ***5*** sogar mit einem noch höheren Gehalt problemlos möglich ist.

Schliesslich zeigte sich, dass die erfindungsgemässen Beispiele gegenüber den Vergleichsbeispielen über bessere Zähigkeitseigenschaften verfüge.

## Patentansprüche

1. Zusammensetzung umfassend
mindestens eine Verbindung **A,** welche mindestens zwei Glycidylether-Gruppen aufweist;
sowie einen linearen oder verzweigten Polyester **B,** welcher in Gegenwart eines Organo-Zinn- oder eines Organo-Titan- Katalysators aus einem makrocyclischen Poly(α,ω-Alkylen-terephtalat) oder aus einem makrocyclischen Poly(α,ω-Alkylen-2,6-Naphtalindicarboxylat) hergestellt wird;
sowie mindestens einen Zähigkeitsverbesserer **C.**

2. Zusammensetzung gemäss Anspruch 1, **dadurch gekennzeichnet, dass** die Verbindung **A,** welche mindestens zwei Glycidylether-Gruppen aufweist, ein Diglycidylether eines Bisphenol-A oder eines Bisphenol-F oder einer Mischung Bisphenol-A/Bisphenol-F ist oder ein flüssiges Oligomer davon ist.

3. Zusammensetzung gemäss Anspruch 1 oder 2, **dadurch gekennzeichnet, dass** der lineare oder verzweigte Polyester **B** ein linearer Polyester **B** ist.

4. Zusammensetzung gemäss Anspruch 3, **dadurch gekennzeichnet, dass** der Polyester **B** die Strukturformel (II) aufweist 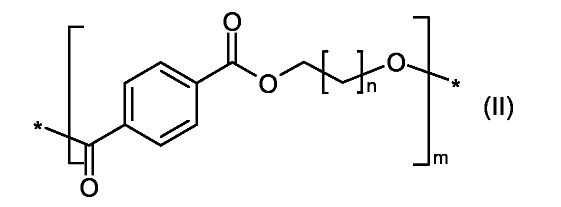 mit n = 1, 2, 3, 4, insbesondere n = 1 oder 3, bevorzugt n=3;
und mit m = 50 - 2000, insbesondere 50 - 800, bevorzugt 50 - 600, insbesondere bevorzugt 100 - 600.

5. Zusammensetzung gemäss Anspruch 3, **dadurch gekennzeichnet, dass** der Polyester **B** die Strukturformel (III) aufweist 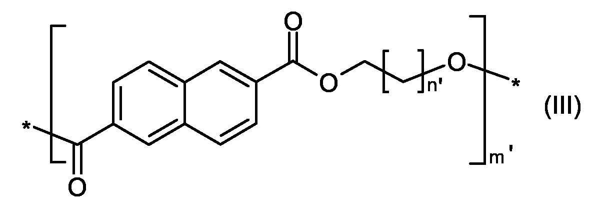 mit n' = 1, 2, 3, 4, insbesondere n' = 1 oder 3, bevorzugt n'=3;
und mit m' = 50 - 200, insbesondere 50 - 800, bevorzugt 50 - 600, insbesondere bevorzugt 100 - 600.

6. Zusammensetzung gemäss einem der Ansprüche 1 bis 5, **dadurch gekennzeichnet, dass** das makrocyclische Poly(α,ω-Alkylen-terephtalat) oder das makrocyclische Poly(α,ω-Alkylen-2,6-Naphtalindicarboxylat) die Struktur der Formel (IV) aufweist 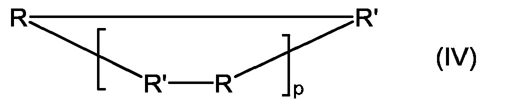 mit R = Ethylen, Propylen, Butylen, Pentylen, insbesondere Ethylen oder Butylen, bevorzugt Butylen; und 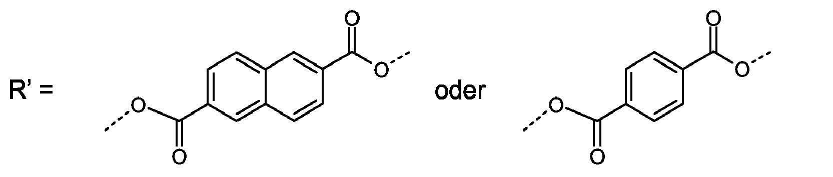 wobei die gestrichelten Linien die Verbindungen mit R angeben; und mit p so gewählt, dass das Molekulargewicht Mₙ des makrocyclischen Poly(α,ω-Alkylen-terephtalat)es oder des makrocyclischen Poly(α,ω-Alkylen-2,6-Naphtalindicarboxylat)es zwischen 300 und 2000 g/mol, insbesondere zwischen 350 bis 800 g/mol liegt.

7. Zusammensetzung gemäss einem der vorhergehenden Ansprüche, **dadurch gekennzeichnet, dass** der Zähigkeitsverbesserer **C**
ein lonen-getauschtes Schichtmineral **C1** ist;
oder ein reaktiver Flüssigkautschuk **C2** ist;
oder ein Blockcopolymer **C3** ist, welches erhalten wird aus einer radikalischen Polymerisation von Methacrylsäureester mit mindestens einem weiteren eine olefinisch Doppelbindung aufweisenden Monomeren.

8. Zusammensetzung gemäss Anspruch 7, **dadurch gekennzeichnet, dass** der Zähigkeitsverbesserer **C** ein lonen-getauschtes Schichtmineral **C1** ist.

9. Zusammensetzung gemäss Anspruch 7, **dadurch gekennzeichnet, dass** in der Zusammensetzung als Zähigkeitsverbesserer **C** neben einem lonen-getauschtem Schichtmineral **C1** zusätzlich entweder ein reaktiver Flüssigkautschuk **C2** oder ein Blockcopolymer **C3** vorhanden ist.

10. Zusammensetzung gemäss einem der Ansprüche 7 bis 9, **dadurch gekennzeichnet, dass** das lonen-getauschte Schichtmineral **C1** ein Kationen-gestauschtes Schichtmineral **C1c** ist, welches erhalten wird aus einem Schichtmineral **C1',** bei welchem zumindest ein Teil der Kationen durch organische Kationen ausgetauscht worden sind.

11. Zusammensetzung gemäss einem der Ansprüche 7 bis 10, **dadurch gekennzeichnet, dass** das Schichtmineral **C1'** ein Schichtsilikat ist.

12. Zusammensetzung gemäss Anspruch 11, **dadurch gekennzeichnet, dass** das Schichtmineral **C1'** ein Kaolinit, ein Montmorillonit, ein Hectorit oder ein lllit ist.

13. Zusammensetzung gemäss einem der Ansprüche 7 bis 9, **dadurch gekennzeichnet, dass** lonen-getauschte Schichtmineral **C1** ein Anionen-getauschtes Schichtmineral **C1a** ist, welches erhalten wird aus einem Schichtmineral **C1",** bei welchem zumindest ein Teil der Anionen durch organische Anionen ausgetauscht worden sind.

14. Zusammensetzung gemäss Anspruch 13, **dadurch gekennzeichnet, dass** das Schichtmineral **C1"** ein Hydrotalcit ist.

15. Zusammensetzung gemäss einem der Ansprüche 7 bis 14, **dadurch gekennzeichnet, dass** das die organischen Kationen die Formeln (V), (VI), (VII), (VIII) oder (IX) aufweisen 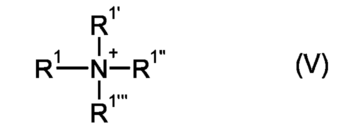 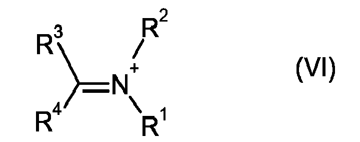 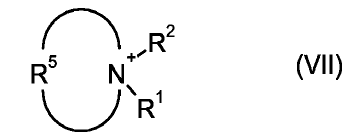 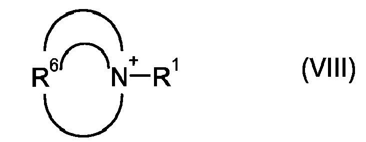 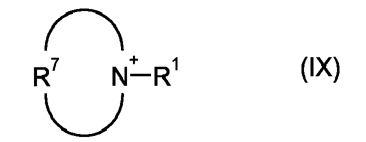 mit X = N, O, P oder S;
R¹, R^{1'}, R^{1"}und R^{1"'} unabhängig voneinander = H, C₁ - C₂₀-Alkyl, substituiertes oder unsubstituiertes Aryl;
R² = H, C₁ - C₂₀-Alkyl, substituiertes oder unsubstituiertes Aryl;
R³ = H, C₁-C₂₀-Alkyl, substituiertes oder unsubstituiertes Aryl oder N(R²)₂; R⁴ = H, C₁-C₂₀-Alkyl, substituiertes oder unsubstituiertes Aryl oder N(R²)₂;
R⁵ = Substituent, welcher zusammen mit dem in Formel (V) gezeigten N⁺ einen gegebenenfalls substituierten Ring von 4 bis 9 Atomen bildet und gegebenenfalls Doppelbindungen aufweist;
R⁶ = Substituent, welcher zusammen mit dem in Formel (VIII) gezeigten N⁺ einen gegebenenfalls substituierten bicyclischen Ring von 6 bis 12 Atomen bildet und der gegebenenfalls weitere Heteroatome oder Kationen von Heteroatomen enthält;
R⁷ = Substituent, welcher zusammen mit dem in Formel (IX) gezeigten N⁺ einen, gegebenenfalls substituierten, heteroaromatischen Ring der Ringgrösse von 5 bis 7 Atomen bildet.

16. Zusammensetzung gemäss einem Ansprüche 7 bis 15, **dadurch gekennzeichnet, dass** der reaktive Flüssigkautschuk C2 ein Glycidylether-Gruppen terminiertes Polyurethanprepolymer ist.

17. Zusammensetzung gemäss Anspruch 16, **dadurch gekennzeichnet, dass** der reaktive Flüssigkautschuk C2 die Formel (X) aufweist 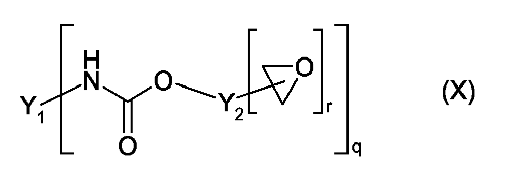 wobei
Y₁ für einen q-wertigen Rest eines mit Isocyanatgruppen terminierten linearen oder verzweigten Polyurethanprepolymeren nach dem Entfernen der endständigen Isocyanatgruppen steht;
Y₂ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen, steht;
q = 2, 3 oder 4 ist; und
r = 1, 2 oder 3 ist.

18. Zusammensetzung gemäss einem der Ansprüche 7 bis 17, **dadurch gekennzeichnet, dass** das für die Herstellung des Blockcopolymer **C3** verwendeten mindestens eine weitere eine olefinisch Doppelbindung aufweisende Monomer ausgewählt ist aus der Gruppe umfassend Styrol, Butadien, Acrylonitril und Vinylacetat.

19. Zusammensetzung gemäss Anspruch 18, **dadurch gekennzeichnet, dass** das Blockcopolymer **C3** ein Blockcopolymer aus Methacrylsäuremethylester, Styrol und Butadien ist.

20. Zusammensetzung gemäss einem der vorhergehenden Ansprüche, **dadurch gekennzeichnet, dass** die Menge Zähigkeitsverbesserer C 10 - 85 Gew.-% bezogen auf die Summe des Gewichts von A + C beträgt.

21. Zusammensetzung gemäss einem der vorhergehenden Ansprüche, **dadurch gekennzeichnet, dass** die Menge linearer oder verzweigter Polyester **B** 85 - 98 Gew.-% der Zusammensetzung beträgt.

22. Verfahren zur Herstellung einer Zusammensetzung gemäss einem der Ansprüche 1 bis 21, **dadurch gekennzeichnet, dass** es die Schritte umfasst
- Bildung einer Vormischung **AC** von Zähigkeitsverbesserer **C** sowie der Verbindung **A,** welche mindestens zwei Glycidylether-Gruppen aufweist,
- Zugabe der Vermischen Vormischung **AC** zum makrocyclischen Poly(α,ω-Alkylen-terephtalat) oder makrocyclischen Poly(α,ω-Alkylen-2,6-Naphtalindicarboxylat), welches mit dem Organo-Zinn- oder Organo-Titan- Katalysators vermengt ist.

23. Verfahren gemäss Anspruch 22, **dadurch gekennzeichnet, dass** die Herstellung des linearen oder verzweigten Polyesters B bei einer Temperatur von 160°C bis 220°, insbesondere zwischen 160°C bis 200°C in Gegenwart der Vormischung **AC** erfolgt.

24. Verwendung einer Vormischung **AC** von Zähigkeitsverbesserer **C** und der Verbindung **A,** welche mindestens zwei Glycidylether-Gruppen aufweist in der Herstellung des einen linearen oder verzweigten Polyester **B,** wie in den Ansprüchen 1 bis 21 beschrieben.

25. Verbundkörper umfassend eine Zusammensetzung gemäss einem der Ansprüche 1 bis 21 sowie Fasern enthält, wobei die Fasern ausgewählt sind aus der Gruppe umfassend Glasfasern, Metallfasern, Kohlenfasern, Aramidfasern, Mineralfasern, Pflanzenfasern sowie Mischungen davon.

26. Verbundkörper gemäss Anspruch 25, **dadurch gekennzeichnet, dass** die Fasern Kohlenstofffasern oder Metallfasern, insbesondere Stahlfasern, sind.

27. Verbundkörper gemäss Anspruch 25 oder 26, **dadurch gekennzeichnet, dass** der Anteil Fasern 30 bis 65 Vol-%, bezogen auf das Volumen des Verbundkörpers beträgt.

28. Verbundkörper gemäss einem der Ansprüche 25 bis 27, **dadurch gekennzeichnet, dass** der Verbundkörper eine lamellenfömige Gestalt aufweist.

29. Verfahren zum Herstellen eines Verbundköpers gemäss einem der Ansprüche 25 bis 28, **dadurch gekennzeichnet, dass** die Zusammensetzung in geschmolzenem Aggregatszustand vorliegt, mit den Fasern kontaktiert wird und in einer Form durch Abkühlen zum Erstarren gebracht wird.

30. Verfahren gemäss Anspruch 29, **dadurch gekennzeichnet, dass** die Form einen Ausgang aufweist, durch welchen während dem Erkalten der Verbundkörper kontinuierlich ausgetragen wird.

31. Verwendung eines Verbundkörpers gemäss einem der Ansprüche 25 bis 28 oder eines Verbundkörpers, welcher nach einem Verfahren gemäss Anspruch 29 oder 30 hergestellt wurde, zur strukturellen Verstärkung eines Bauwerkes oder eines Transportmittels.
